(19) Europäisches Patentamt
European Patent Office
Office européen des brevets

(11) **EP 2 118 528 B1**

(12) **EUROPÄISCHE PATENTSCHRIFT**

(45) Veröffentlichungstag und Bekanntmachung des Hinweises auf die Patenterteilung:
**13.02.2013 Patentblatt 2013/07**

(21) Anmeldenummer: 08709273.0

(22) Anmeldetag: **03.03.2008**

(51) Int Cl.:
*F16H 61/12* (2010.01)        *F16H 59/40* (2006.01)
*F16H 59/42* (2006.01)

(86) Internationale Anmeldenummer:
**PCT/EP2008/052544**

(87) Internationale Veröffentlichungsnummer:
**WO 2008/110470 (18.09.2008 Gazette 2008/38)**

(54) **VERFAHREN ZUR ERMITTLUNG DER ABTRIEBSDREHZAHL EINES SCHALTGETRIEBES**

METHOD FOR DETERMINING THE OUTPUT ROTATIONAL SPEED OF A MANUAL TRANSMISSION

PROCÉDÉ DE DÉTERMINATION DE LA VITESSE DE ROTATION DE SORTIE D'UNE TRANSMISSION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.03.2007 DE 102007011896**

(43) Veröffentlichungstag der Anmeldung:
**18.11.2009 Patentblatt 2009/47**

(73) Patentinhaber: **ZF Friedrichshafen AG**
**88038 Friedrichshafen (DE)**

(72) Erfinder:
• PETZOLD, Rainer
  88045 Friedrichshafen (DE)
• STEINBORN, Mario
  88046 Friedrichshafen (DE)
• VEITTINGER, Stefan
  88085 Langenargen (DE)

(56) Entgegenhaltungen:
EP-A- 0 241 216        EP-A- 0 459 274
WO-A-98/13620        DE-A1-102004 039 273
US-A- 4 896 569        US-A- 5 855 532
US-B1- 7 120 531

**Beschreibung**

Die Erfindung betrifft ein Verfahren zur Ermittlung der Abtriebsdrehzahl eines Schaltgetriebes eines Kraftfahrzeugs für die Steuerung von Übersetzungsänderungsvorgängen im Schaltgetriebe gemäß dem Oberbegriff des Patentanspruchs 1, und wie gekannt aus EP 0 241 216 A.

Automatisierte Schaltgetriebe verfügen bekanntermaßen über Schalt- und Wählaktuatoren, die von einer Steuerungseinrichtung zur Durchführung von Übersetzungsänderungsvorgängen ansteuerbar sind. Um solche Gangschalt- und Wählvorgänge möglichst schnell und für die Fahrzeuginsassen komfortabel steuern zu können, benötigt die Steuerungseinrichtung eine genaue Kenntnis über die Drehzahlen der Getriebeeingangswelle und der Getriebeausgangswelle. Dies gilt insbesondere für unsynchronisierte, mit Schaltklauen versehene automatisierte Schaltgetriebe, bei denen zur Durchführung eines Rückschaltvorgangs durch Einflussnahme auf den Antriebsmotor des Fahrzeugs die Drehzahl der Getriebeeingangswelle auf eine vorgegebene Zieldrehzahl angehoben und bei dem bei einer Hochschaltung die Getriebeeingangswelle mittels einer Getriebebremse auf eine vorgegebene Zieldrehzahl abgebremst werden muss. Die jeweiligen Zieldrehzahlen hängen dabei von der aktuellen Fahrzeuggeschwindigkeit und von der zu schaltenden neuen Getriebeübersetzung ab. Diese Drehzahlanpassungen erfolgen in einem Zeitraum, in dem eine Fahrkupplung zwischen dem Fahrzeugantriebsmotor und dem Getriebe geöffnet und der bisherige Gang ausgelegt sowie der neue Gang noch nicht eingelegt ist, wobei sich das Getriebe in seiner Neutral-Stellung befindet.

Die Erfassung der genannten Drehzahlen erfolgt üblicherweise mit Hilfe von Drehzahlsensoren. Derartige Drehzahlsensoren benötigen im engen Getriebegehäuse im Bereich der Getriebeeingangswelle bzw. der Getriebeausgangswelle einen eigenen Bauraum. Zudem erhöht ihr Einbau in das Getriebe dessen Herstellkosten. Darüber hinaus besteht der Wunsch, bei Getrieben mit einem Drehzahlsensor an der Getriebeabtriebswelle dessen Drehzahlwerte hinsichtlich ihrer Plausibilität überprüfen zu können, um so fehlerhafte Drehzahlwerte von der Steuerung des Getriebes ausschließen zu können.

Vor diesem Hintergrund liegt der Erfindung die Aufgabe zugrunde, ein Verfahren vorzustellen, mit dem unter Verzicht auf einen Drehzahlsensor an der Getriebeabtriebswelle deren Drehzahl mit ausreichender Genauigkeit berechnet und für die Steuerung von Übersetzungsänderungen im Getriebe genutzt werden kann. Außerdem soll dieses Verfahren dazu geeignet sein, bei einem Getriebe mit einem Sensor zur Messung der Drehzahl der Getriebeabtriebswelle die gemessenen Drehzahlwerte auf ihre Richtigkeit zu überprüfen.

Die Lösung dieser Aufgabe ergibt sich aus den Merkmalen des Hauptanspruchs, während vorteilhafte Weiterbildungen des Verfahrens den Unteransprüchen entnehmbar sind.

Der Erfindung liegt die Erkenntnis zugrunde, dass die Abtriebsdrehzahl des Getriebes mit ausreichender Genauigkeit aus der Getriebeeingangsdrehzahl, der bisherigen Getriebeübersetzung sowie einem Korrekturwert auch während eines Schaltvorgangs in demjenigen Zeitraum berechnet werden kann, in dem der bisherige Gang ausgelegt und der neue Gang noch nicht eingelegt ist.

Bekanntermaßen lässt sich bei einem eingelegten Getriebegang die Getriebeabtriebswellendrehzahl $N\_AB$ aus dem Quotienten der Getriebeeingangsdrehzahl $N\_EG$ und der aktuellen Getriebeübersetzung $Ü\_G$ gemäß der Gleichung $N\_AB = N\_EG / Ü\_G$ ermitteln. Diese Gleichung kann prinzipiell auch dann zur Bestimmung der Getriebeabtriebsdrehzahl genutzt werden, wenn sich das Getriebe während eines Schaltvorgangs in seiner Neutral-Stellung befindet, in der der bisherige Gang ausgelegt und der neue Gang noch nicht drehmomentübertragend eingelegt ist. Sie ist jedoch derart zu ergänzen, dass während der Getriebeschaltung auf die Getriebeabtriebsdrehzahl wirkende Einflussfaktoren korrigierend berücksichtigt werden.

Gemäß den Merkmalen des Hauptanspruchs betrifft die Erfindung daher ein Verfahren zur Ermittlung der Abtriebsdrehzahl eines Schaltgetriebes eines Kraftfahrzeugs für die Steuerung von Übersetzungsänderungsvorgängen im Schaltgetriebe. Bei diesem Verfahren ist vorgesehen, dass die genannte Abtriebsdrehzahl während eines Schaltvorgangs in demjenigen Zeitraum berechnet wird, in dem der bisherige Gang ausgelegt und der neue Gang noch nicht eingelegt ist, und dass die berechnete Abtriebsdrehzahl zur Steuerung einer Anpassung der Drehzahl der Getriebeeingangswelle (oder einer anderen mit dieser vor dem Getriebeabtrieb antriebsgekoppelten Getriebewelle) an die Drehzahl der Getriebeausgangswelle verwendet wird, oder dass die berechnete Abtriebsdrehzahl zur Plausibilisierung eines sensorisch ermittelten Wertes der Abtriebsdrehzahl genutzt wird.

Gemäß der ersten Verfahrensalternative wird also während der Schaltung derjenige Drehzahlwert der Getriebeabtriebswelle berechnet, der während des Schaltzeitraums voraussichtlich tatsächliche vorhanden ist und auch messbar wäre, wenn nicht Kosten sparend auf einen diesbezüglichen Drehzahlsensor verzichtet worden wäre. Dieser berechnete Abtriebsdrehzahlwert wird dann für die Steuerung der Getriebeschaltung verwendet, also beispielsweise dafür, um die Drehzahl die Getriebeeingangswelle bei einem Hochschaltvorgang auf die Synchrondrehzahl abzubremsen oder bei einem Rückschaltvorgang auf diese anzuheben.

Gemäß der zweiten Verfahrensvariante wird die berechnete Getriebeabtriebsdrehzahl dazu verwendet, um einen sensorisch gemessenen Abtriebsdrehzahlwert auf seine Plausibilität zu überprüfen.

Gemäß einem weiteren Merkmal der Erfindung ist vorgesehen, dass vor dem Beginn der Schaltung ein Korrekturwert F bestimmt wird, der zur Berechnung der Abtriebsdrehzahl während der Schaltung verwendet wird. Dieser Korrekturwert F, $F_{Kal}$ gibt an, ob und in welchem Umfang sich die aktuelle Fahrsituation auf die zeitliche Änderung der Getriebeabtriebsdrehzahl während des Schaltvorgangs auswirkt. Der Korrekturwert F, $F_{Kal}$ kann dabei die tatsächliche Getriebeabtriebsdrehzahl und/oder ihren zeitlichen Drehzahlverlauf vor Beginn der Schaltung berücksichtigen. Dabei kann der Korrekturwert F, $F_{Kal}$ eine Drehzahldifferenz oder ein dimensionsloser Verhältniswert sein.

Die rechnerische Ermittlung der Getriebeabtriebsdrehzahl N_AB erfolgt in einem Getriebesteuerungsgerät bevorzugt durch folgende Verfahrensschritte:

a) Ermitteln der Eingangsdrehzahl N_EG des Getriebes unmittelbar vor der Schaltung,

b) Ermitteln der zuletzt genutzten Getriebeübersetzung Ü_G vor der Schaltung,

c) Berechnen der Abtriebsdrehzahl nach Beginn der Schaltung gemäß der Gleichung N_AB = [N_EG /Ü_G ] * F, wenn der Korrekturwert F ein Verhältniswert ist, oder

nach der Gleichung N_AB = [N_EG / Ü_G] + F, wenn der Korrekturwert F eine Drehzahldifferenz ist.

In Weiterbildung des Verfahrens ist vorgesehen, dass der Korrekturwert F als Verhältniswert den Betrag von "1" hat, wenn aus ermittelten Fahrsituationsdaten abgeleitet wird, dass die Fahrzeuggeschwindigkeit während des Schaltvorgangs voraussichtlich konstant bleibt, einen Betrag von "> 1" hat, wenn aus ermittelten Fahrsituationsdaten abgeleitet wird, dass die Fahrzeuggeschwindigkeit während des Schaltvorgangs voraussichtlich ansteigt, und einen Betrag von "< 1" hat, wenn aus ermittelten Fahrsituationsdaten abgeleitet wird, dass die Fahrzeuggeschwindigkeit während des Schaltvorgangs voraussichtlich abnimmt.

Nach anderen Weiterbildungen des Verfahrens gemäß der Erfindung ist der Betrag des Korrekturwertes F durch den dynamischen Fahrwiderstand des Fahrzeuges bestimmt. So ist der Betrag des Korrekturwertes F beispielsweise durch die aktuelle Neigung des Fahrweges in der Fahrtrichtung, von der aktuelle Fahrzeugmasse, durch die aktuelle Fahrzeuggeschwindigkeit in Fahrtrichtung vor der Schaltung und/oder durch die aktuelle Fahrzeugbeschleunigung in Fahrtrichtung und/oder quer zur Fahrtrichtung vor der Schaltung bestimmt.

Entsprechend einer zweiten konkreten Ausbildung des Verfahrens gemäß der Erfindung ist zur rechnerischen Bestimmung der Getriebeabtriebsdrehzahl vorgesehen, dass die Abtriebsdrehzahl des Schaltgetriebes während einer Getriebeschaltung bestimmt wird durch folgende Verfahrensschritte:

- Messen von einem die Fahrzeuggeschwindigkeit zumindest mittelbar anzeigenden Drehzahlwert, der für eine direkte Verwendung zur Steuerung von Getriebeschaltabläufen zu ungenau ist und

- Korrigieren des die Fahrzeuggeschwindigkeit zumindest mittelbar anzeigenden Drehzahlwertes mit einem zuvor bestimmten Korrekturwert $F_{Kal}$ zur Ermittlung der Getriebeabtriebsdrehzahl.

In Weiterbildung dieser zweiten konkreten Ausbildung des Verfahrens gemäß der Erfindung ist vorgesehen, dass zur Bestimmung des Korrekturwertes $F_{Kal}$ vor einer Getriebeschaltung, also bei geschaltetem Getriebegang, die tatsächliche Eingangsdrehzahl des Getriebes ermittelt wird, dass anschließend zur Bestimmung der tatsächlichen Getriebeabtriebsdrehzahl die gemessene Eingangsdrehzahl durch die zuletzt genutzte Übersetzung dividiert wird, dass dann der die Fahrzeuggeschwindigkeit zumindest mittelbar anzeigende Drehzahlwert mit einem Übersetzungswert multipliziert wird, welcher eine Übersetzung (Übersetzungswert = kleiner oder größer Null) oder keine Übersetzung (Übersetzungswert = 1) zwischen der Getriebeabtriebswelle und demjenigen drehbaren Fahrzeugbauteil kennzeichnet, an welchem der die Fahrzeuggeschwindigkeit zumindest mittelbar anzeigende Drehzahlwert gemessen wird, und dass dann zur Bildung des Korrekturwertes $F_{Kal}$ entweder die tatsächliche Abtriebsdrehzahl mit dem übersetzungskorrigierten, die Fahrzeuggeschwindigkeit zumindest mittelbar anzeigenden Drehzahlwert ins Verhältnis gesetzt wird, oder ein Differenzbetrag zwischen diesen beiden Drehzahlwerten gebildet wird.

In weiterer Ausbildung dieser Variante kann vorgesehen sein, dass der die Fahrzeuggeschwindigkeit zumindest mittelbar anzeigende Drehzahlwert die Drehzahl wenigstens eines Fahrzeugrades oder ein Tachometersignal für die Fahrgeschwindigkeit ist, welcher aus einem Fahrzeug-Datenbus-System (CAN-Bus) ausgelesen wird.

Das Verfahren gemäß der Erfindung ist vorzugsweise zur Steuerung eines automatisierten Schaltgetriebes nutzbar. Es kann dabei dazu dienen, die Messwerte eines vorhandenen Drehzahlsensors an der Getriebeabtriebswelle hinsichtlich ihrer Plausibilität bzw. Richtigkeit zu überprüfen, oder um einen Sensor zur Erfassung der Getriebeabtriebsdrehzahl vollständig zu ersetzen.

Zur weiteren Verdeutlichung der Erfindung werden nachfolgend zwei Ausführungsbeispiele beschrieben:

An einem unsynchronisierten, klauengeschalteten automatisierten Schaltgetriebe ohne einen Drehzahlsensor an der Getriebeabtriebswelle oder einer damit abtriebsgekoppelten anderen Welle soll ein Hochschaltvorgang durchgeführt werden. Der an sich bekannte Steuerungsablauf erfolgt derart, dass zunächst die Fahrkupplung zwischen dem Fahrzeugantriebsmotor und dem Getriebe geöffnet und der bisherige Gang ausgelegt wird. Anschließend wird die Drehzahl der Getriebeeingangswelle mittels einer von der Steuerungseinrichtung gesteuerten Getriebebremse soweit auf eine Zieldrehzahl für den neuen und höheren Gang abgebremst, dass unter Einrechnung der Übersetzung des neuen Gangs die Getriebeeingangsdrehzahl weitgehend drehzahlsynchron zu der Getriebeausgangsdrehzahl ist. Wenn dies geschehen ist, wird mittels der Klauenkupplung des neuen Gangs eine kraftschlüssige Verbindung im Getriebe zwischen der Getriebeeingangswelle und der Getriebeausgangswelle hergestellt, so dass über das Getriebe ein Drehmoment übertragen werden kann. Anschließend wird die Fahrkupplung wieder geschlossen.

Die Steuerung der Getriebebremse zur Abbremsung der Getriebeeingangswelle bis auf ihre Zieldrehzahl hängt daher entscheidend von der aktuellen Getriebeabtriebsdrehzahl N_AB ab. Um diese Zieldrehzahl an der Getriebeeingangswelle optimal einstellen zu können, sieht die Erfindung vor, dass die aktuelle Abtriebsdrehzahl N_AB während eines Schaltvorgangs in demjenigen Zeitraum berechnet wird, in dem der bisherige Gang ausgelegt und der neue Gang noch nicht eingelegt ist, und dass die berechnete Getriebeabtriebsdrehzahl zur Steuerung einer Anpassung der Drehzahl N_EG der Getriebeeingangswelle (oder einer anderen mit dieser vor dem Getriebeabtrieb antriebsgekoppelten Getriebewelle) an die Drehzahl N_AB der Getriebeausgangswelle verwendet wird.

Dadurch kann in besonders vorteilhafter Weise auch ohne die Nutzung eines Drehzahlsensors an der Getriebeausgangswelle der Gangwechsel bzw. das Abbremsen der Getriebeeingangswelle bis auf ihre Zieldrehzahl gesteuert werden.

Die rechnerische Bestimmung der Getriebeausgangsdrehzahl erfolgt derart, dass zunächst bei eingelegtem Gang die Eingangsdrehzahl N_EG des Getriebes mittels eines Drehzahlsensors an der Getriebeeingangswelle gemessen und der Steuerungseinrichtung zur Verfügung gestellt wird. Anschließend wird von der Steuerungseinrichtung die zuletzt genutzte Getriebeübersetzung Ü_G festgestellt und ein Korrekturwert F ermittelt. Dieser Korrekturwert kann so ermittelt werden, dass er als Additionsglied oder als Multiplikationsglied in die Gleichung zur Berechnung der Getriebeabtriebsdrehzahl während der Schaltung eingeht. Sodann wird während der Schaltung nach der eingangs schon erläuterten Gleichung

$$N\_AB = [\,N\_EG\,/\,Ü\_G\,] * F \quad \text{oder} \quad N\_AB = [\,N\_EG\,/\,Ü\_G\,] + F$$

die Getriebeabtriebsdrehzahl N_AB berechnet, bei welcher der Korrekturwert F angibt, ob und in welchem Umfang sich die aktuelle Fahrsituation auf die zeitliche Änderung der Getriebeabtriebsdrehzahl N_AB während des Schaltvorgangs auswirkt.

Dem als Verhältniswert gebildeten Korrekturwert F kann dabei ein Betrag von "1" zugewiesen werden, wenn aus den ermittelten Fahrsituationsdaten abgeleitet wird, dass die Fahrzeuggeschwindigkeit während des Schaltvorgangs konstant bleibt. Der Korrekturwert F bleibt in einem solchen Fall ohne Einfluss auf den berechneten Wert der Getriebeabtriebsdrehzahl, da davon ausgegangen wird, dass sich die Fahrgeschwindigkeit bzw. die Getriebeabtriebsdrehzahl während der kurzen Dauer, in der das Getriebe während der Hochschaltung in Neutral geschaltet ist, sich voraussichtlich nicht ändert..

Bei einer anderen Fahrsituation kann dem als Verhältniswert gebildeten Korrekturwert ein Betrag von "F > 1" zugewiesen werden, wenn aus ermittelten Fahrsituationsdaten abgeleitet wird, dass die Fahrzeuggeschwindigkeit während des Schaltvorgangs voraussichtlich ansteigt. Ein solcher Anstieg der Fahrgeschwindigkeit kann beispielsweise entstehen, wenn sich das Fahrzeug auf einer stark abschüssigen Fahrbahn befindet und trägheitsbedingt beschleunigt. Der Anstieg der Fahrgeschwindigkeit hat wegen der formschlüssigen Antriebsverbindung zwischen der Getriebeausgangswelle und den Fahrzeugrädern zur Folge, dass auch die Drehzahl der Getriebeausgangswelle während des genannten Schaltvorgangs ansteigt. Die Multiplikation des Korrekturwertes F mit einem Betrag ">1" berücksichtigt diesen Umstand.

Der für die jeweilige Fahrsituation passende Wert des Korrekturwertes F ist aus einer abgespeicherten Tabelle in der Steuerungseinrichtung auslesbar, welche abgespeicherte Ergebnisse von Testfahrten beinhaltet. Gemäß einer anderen Variante wird der Korrekturwert F jeweils aktuell nach einem Modell berechnet.

Aus dieser abgespeicherten Tabelle sind auch Korrekturwerte mit einem Betrag von "F< 1" entnehmbar oder nach dem Modell berechenbar, wenn aus ermittelten Fahrsituationsdaten abgeleitet wird, dass die Fahrzeuggeschwindigkeit während des Schaltvorgangs voraussichtlich abnimmt. Dies ist beispielsweise dann der Fall, wenn sich das Fahrzeug auf einer Fahrbahn mit einer großen Steigung bewegt und trägheitsbedingt abgebremst wird. Der konkrete Korrekturwert von "F< 1" hängt dabei ebenfalls von der erwähnten Fahrsituation bzw. der konkreten Steigung der Fahrbahn ab und wirkt als Multiplikand in der obigen Gleichung N_AB = [N_EG / Ü_G] * F so, dass die für den Zeitpunkt vor der Einleitung der Hochschaltung bestimmte Getriebeabtriebsdrehzahl N_AB mehr oder weniger stark reduziert wird.

Wie schon erwähnt wurde, können durch den Korrekturwert F viele verschiedene Fahrsituationen berücksichtigt werden; so neben der Fahrbahnneigung beispielsweise auch der aktuelle dynamische Fahrwiderstand des Fahrzeuges, die aktuelle Fahrzeugmasse, die aktuelle Fahrzeuggeschwindigkeit und/oder die aktuelle Fahrzeugbeschleunigung in allen Raumachsen bzw. der Drehzahlgradient der Getriebeeingangswelle oder der Getriebeausgangswelle kurz vor der Einleitung der Hochschaltung.

Bei einer zweiten Verfahrensvariante erfolgt die Berechnung der Getriebeabtriebsdrehzahl ebenfalls während des Schaltvorgangs, also zu einem Zeitpunkt, in dem der vorherige Gang ausgelegt und der neue Gang noch nicht eingelegt ist.

Bei dieser Verfahrensvariante ist jedoch vorgesehen, dass zur Bestimmung der Getriebeabtriebsdrehzahl N_AB zunächst ein Drehzahlwert gemessen wird, der im Fahrzeug für andere Zwecke, beispielsweise für Steuerungszwecke eines Antiblockiersystem oder eines Antriebsschlupfregelungssystems gemessen wird und für die Steuerung von Getriebeübersetzungssteuerungsvorgängen an sich zu ungenau ist und/oder pro Zeiteinheit nicht ausreichend häufig bereitgestellt wird. Dieser Drehzahlwert ist jedoch zumindest mittelbar abhängig von der Fahrzeuggeschwindigkeit und kann beispielsweise die Drehzahl eines Fahrzeugrades angeben.

Nachdem der die Fahrzeuggeschwindigkeit zumindest mittelbar anzeigenden Drehzahlwert von der Steuerungseinrichtung des Getriebes beispielsweise aus einem CAN-Bus-System des Fahrzeuges herausgelesen wurde, wird dieser zur Bestimmung der aktuellen Getriebeabtriebsdrehzahl mit einem zuvor bestimmten Korrekturwert zur Ermittlung der tatsächlichen Abtriebsdrehzahl N_AB korrigiert. Der Korrekturwert ist dabei nur eine einzelne abgespeicherte Größe oder wird aus einer abgespeicherten Tabelle in der Steuerungseinrichtung beispielsweise in Abhängigkeit von anderen Korrekturwerten ausgelesen und für die Berechung der Getriebeabtriebsdrehzahl genutzt.

Gemäß einem konkreten Verfahrensausbildung wird zur Bestimmung des Korrekturwertes vor der Gangschaltung, also bei eingelegtem Gang, die Abweichung oder der Quotient zwischen der tatsächlichen Getriebeabtriebsdrehzahl sowie einer aus dem anderen, bekanntermaßen zu ungenauen Drehzahlwert berechneten Getriebeabtriebsdrehzahl gebildet, und bei der Bestimmung der Getriebeabtriebsdrehzahl während der Gangschaltung als Korrekturwert berücksichtigt.

Dabei ist gemäß der Erfindung vorgesehen, dass zur Bestimmung des genannten Korrekturwertes vor einer Getriebeschaltung, also bei geschaltetem Getriebegang, zunächst die Eingangsdrehzahl N_EG des Getriebes ermittelt wird, dass anschließend zur Bestimmung der tatsächlichen Abtriebsdrehzahl N_AB des Getriebes die gemessene Eingangsdrehzahl N_EG durch die zuletzt genutzte Übersetzung Ü_G dividiert wird, dass dann der die Fahrzeuggeschwindigkeit zumindest mittelbar anzeigende Drehzahlwert mit einem solchen Übersetzungswert multipliziert wird, welcher eine Übersetzung (Übersetzungswert = kleiner oder größer Null) oder keine Übersetzung (Übersetzungswert = 1) zwischen der Getriebeabtriebswelle und demjenigen drehbaren Fahrzeugbauteil (z.B. Fahrzeugrad) kennzeichnet, an welchem der die Fahrzeuggeschwindigkeit anzeigende Drehzahlwert gemessen wird, und dass dann zur Bildung des Korrekturwertes $F_{KAL}$ die tatsächliche Abtriebsdrehzahl N_AB mit dem übersetzungskorrigierten, die Fahrzeuggeschwindigkeit zumindest mittelbar anzeigenden Drehzahlwert ins Verhältnis gesetzt wird, oder der Korrekturwert $F_{KAL}$ als Drehzahldifferenz zwischen diesen beiden Drehzahlwerten gebildet wird.

Bevorzugt werden die beiden hier vorgestellten Verfahrensalternativen, also die Berechnung der Getriebeabtriebsdrehzahl während der Schaltung für einen Antriebsstrang ohne Drehzahlsensor an der Getriebeabtriebswelle sowie für die Berechnung der Getriebeabtriebsdrehzahl während der Schaltung zur Plausibilisierung eines mittels eines Drehzahlsensors an der Getriebeabtriebswelle gemeinsam in ein und dem selben Getriebesteuerungsgerät abgespeichert.

Bei einem Fahrzeug mit einem Antriebsstrang, bei dem ein Drehzahlsensor an der Getriebeabtriebswelle nicht vorhanden ist, wird die Getriebeabtriebsdrehzahl rechnerisch, und wie Untersuchungen zeigten, mit ausreichend guter Qualität bestimmt. Bei einem Fahrzeug mit einem Antriebsstrang, bei dem ein Drehzahlsensor an der Getriebeabtriebswelle vorhanden ist, wird die Getriebeabtriebsdrehzahl sensorisch ermittelt sowie ebenfalls rechnerisch bestimmt, wobei diese Variante die Möglichkeit eröffnet, die Richtigkeit der gemessenen Werte der Getriebeabtriebsdrehzahl ständig überprüfen zu können. Sofern der gemessene und der rechnerisch ermittelte Drehzahlwert über ein vorbestimmtes Maß voneinander abweichen, kann auf einen technischen Defekt bei der Drehzahlmessung geschlossen werden.

## Patentansprüche

**1.** Verfahren zur Ermittlung der Abtriebsdrehzahl (N_AB) eines Schaltgetriebes eines Kraftfahrzeugs für die Steuerung von Übersetzungsänderungsvorgängen im Schaltgetriebe, wobei die Abtriebsdrehzahl (N_AB) während eines Schaltvorgangs in demjenigen Zeitraum berechnet wird, in dem der bisherige Gang ausgelegt und der neue Gang noch nicht eingelegt ist,
und dass die berechnete Abtriebsdrehzahl (N_AB) zur Steuerung einer Anpassung der Drehzahl (N_EG) der Getriebeeingängswe!!e oder einer anderen mit dieser vor dem Getriebeabtrieb antriebsgekoppelten Getriebewelle an die Drehzahl der Getriebeausgangswelle verwendet wird, **dadurch gekennzeichnet, dass** die Abtriebsdrehzahl (N_AB) des Schaltgetriebes während einer Getriebeschaltung bestimmt wird durch folgende Verfahrensschritte:

- Messen von einem die Fahrzeuggeschwindigkeit zumindest mittelbar anzeigenden Drehzahlwert, der für eine direkte Verwendung zur Steuerung von Getriebeschaltabläufen zu ungenau ist und
- Korrigieren des die Fahrzeuggeschwindigkeit zumindest mittelbar anzeigenden Drehzahlwertes mit einem zuvor bestimmten Korrekturwert ($F_{Kal}$) zur Ermittlung der Abtriebsdrehzahl (N_AB).

2. Verfahren nach Anspruch 1, **dadurch gekennzeichnet, dass** vor dem Beginn der Schaltung ein Korrekturwert (F, $F_{Ka}$) bestimmt wird, der zur Berechnung der Abtriebsdrehzahl (N_AB) während der Schaltung verwendet wird.

3. Verfahren nach Anspruch 2, dadurch **gekennzeich**n e t , dass der Korrekturwert (F) die tatsächliche Abtriebsdrehzahl (N_AB) und/oder ihren zeitlichen Drehzahlverlauf vor Beginn der Schaltung berücksichtigt.

4. Verfahren nach Anspruch 3, **dadurch gekennzeichnet, dass** der Korrekturwert (F, $F_{Kal}$) eine Drehzahldifferenz oder ein Verhältniswert ist.

5. Verfahren nach Anspruch 1, **dadurch gekennzeichnet, dass** zur Bestimmung des Korrekturwertes ($F_{Kal}$) vor einer Getriebeschaltung, also bei geschaltetem Getriebegang, die tatsächliche Eingangsdrehzahl (N_EG) des Getriebes ermittelt wird,
dass anschließend zur Bestimmung der tatsächlichen Abtriebsdrehzahl (N_AB) des Getriebes die gemessene Eingangsdrehzahl (N_EG) durch die zuletzt genutzte Übersetzung (Ü_G) dividiert wird,
dass dann der die Fahrzeuggeschwindigkeit zumindest mittelbar anzeigende Drehzahlwert mit einem Übersetzungswert multipliziert wird, welcher eine Übersetzung (Übersetzungswert = kleiner oder größer Null) oder keine Übersetzung (Übersetzungswert = 1) zwischen der Getriebeabtriebswelle und demjenigen drehbaren Fahrzeugbauteil kennzeichnet, an welchem der die Fahrzeuggeschwindigkeit zumindest mittelbar anzeigende Drehzahlwert gemessen wird, und dass dann zur Bestimmung des Korrekturwertes ($F_{Kal}$) die tatsächliche Abtriebsdrehzahl (N_AB) mit dem übersetzungskorrigierten, die Fahrzeuggeschwindigkeit zumindest mittelbar anzeigenden Drehzahlwert ins Verhältnis gesetzt wird,
oder dass zur Bestimmung des Korrekturwertes ($F_{Kal}$) ein Differenzbetrag zwischen diesen beiden Drehzahlwerten berechnet wird.

6. Verfahren nach Anspruch 1 oder 5, **dadurch gekennzeichnet, dass** der die Fahrzeuggeschwindigkeit zumindest mittelbar anzeigende Drehzahlwert die Drehzahl wenigstens eines Fahrzeugrades oder ein Tachometersignal für die Fahrgeschwindigkeit ist, welcher aus einem Fahrzeug-Datenbus-System (CAN-Bus) ausgelesen wird.

7. Verfahren nach zumindest einem der Ansprüche 1 bis 6, **dadurch gekennzeichnet, dass** das Verfahren zur Steuerung eines automatisierten Schaltgetriebes verwendet wird.

**Claims**

1. Method for determining the output rotational speed (N_AB) of a manual transmission of a motor vehicle for the control of transmission ratio change operations in the manual transmission, wherein the output rotational speed (N_AB) during a shifting operation is calculated in that period of time in which the previous gear is disengaged and the new gear is not yet engaged,
and wherein the calculated output rotational speed (N_AB) is used to control an adjustment in the rotational speed (N_EG) of the transmission input shaft or another transmission shaft, which is drive-coupled thereto upstream of the transmission output, to the rotational speed of the transmission output shaft, **characterized in that** the output rotational speed (N_AB) of the manual transmission is determined during a transmission shift by the following method steps:

- Measurement of a rotational speed value which displays the vehicle speed at least indirectly and which is too imprecise for a direct use for control of transmission shifting procedures and
- Correction of the rotational speed value which displays the vehicle speed at least indirectly with a previously determined correction value ($F_{Kal}$) for identifying the output rotational speed (N_AB).

2. Method according to Claim 1, **characterized in that**, prior to the start of shifting, a correction valve (F, $F_{Kal}$) is determined which is used to calculate the output rotational speed (N_AB) during shifting.

3. Method according to Claim 2, **characterized in that** the correction valve (F) takes into account the actual output rotational speed (N_AB) and/or its temporal rotational speed profile prior to the start of shifting.

**4.** Method according to Claim 3, **characterized in that** the correction valve (F, $F_{Kal}$) is a rotational speed difference or a ratio value.

**5.** Method according to Claim 1, **characterized in that**, for determining the correction valve ($F_{Kal}$) prior to a transmission shift, i.e. in the case of a shifted transmission gear, the actual input rotational speed (N_EG) of the transmission is identified,
that subsequently, for determining the actual output rotational speed (N_AB) of the transmission, the measured input rotational speed (N_EG) is divided by the last used transmission ratio (Ü_G),
that the rotational speed which displays the vehicle speed at least indirectly is then multiplied with a transmission ratio value which characterizes a transmission ratio (transmission ratio value = less than or greater than zero) or no transmission ratio (transmission ratio value = 1) between the transmission output shaft and that rotatable vehicle component at which the rotational speed value which displays the vehicle speed at least indirectly is measured,
and that then, for determining the correction value ($F_{Kal}$), the actual output rotational speed (N_AB) is expressed as a ratio with the transmission ratio-corrected rotational speed value which displays the vehicle speed at least indirectly,
and that, for determining the correction value ($F_{Kal}$), a differential amount between these two rotational speed values is calculated.

**6.** Method according to Claim 1 or 5, **characterized in that** the rotational speed value which displays the vehicle speed at least indirectly is the rotational speed at least of a vehicle wheel or a tachometer signal for the driving speed which is read from a vehicle databus system (CAN bus).

**7.** Method according to at least one of Claims 1 to 6, **characterized in that** the method is used to control an automated transmission.

**Revendications**

**1.** Procédé de détermination de la vitesse de rotation de sortie (N_AB) d'une transmission d'un véhicule automobile pour la commande d'opérations de changement de rapports dans la transmission, la vitesse de rotation de sortie (N_AB) étant calculée pendant une opération de changement de vitesse dans l'intervalle de temps dans lequel la vitesse précédente est désenclenchée et la nouvelle vitesse n'est pas encore enclenchée,
et la vitesse de rotation de sortie (N_AB) calculée étant utilisée pour commander une adaptation de la vitesse de rotation (N_EG) de l'arbre d'entrée de boîte de vitesses ou d'un autre arbre de transmission accouplé avec entraînement à celui-ci en avant de prise de force de la transmission à la vitesse de rotation de l'arbre de sortie de boîte de vitesses, **caractérisé en ce que** la vitesse de rotation de sortie (N_AB) de la transmission est déterminée pendant un changement de vitesse de la transmission par les étapes de procédé suivantes :

- mesure d'une valeur de vitesse de rotation indiquant au moins de manière indirecte la vitesse du véhicule, laquelle est trop imprécise pour une utilisation directe pour la commande des déroulements de changement de vitesse de la transmission et
- correction de la valeur de vitesse de rotation indiquant au moins de manière indirecte la vitesse du véhicule avec une valeur de correction déterminée préalablement ($F_{Kal}$) pour déterminer la vitesse de rotation de sortie (N_AB).

**2.** Procédé selon la revendication 1, **caractérisé en ce qu'**avant le début du changement de vitesse, une valeur de correction (F, $F_{Kal}$) est déterminée, laquelle est utilisée pour calculer la vitesse de rotation de sortie (N_AB) pendant le changement de vitesse.

**3.** Procédé selon la revendication 2, **caractérisé en ce que** la valeur de correction (F) tient compte de la vitesse de rotation de sortie effective (N_AB) et/ou de l'allure dans le temps de la vitesse de rotation avant le début du changement de vitesse.

**4.** Procédé selon la revendication 3, **caractérisé en ce que** la valeur de correction (F, $F_{Kal}$) est une différence de vitesse de rotation ou une valeur de rapport.

**5.** Procédé selon la revendication 1, **caractérisé en ce que** pour déterminer la valeur de correction ($F_{Kal}$) avant un changement de vitesse de la transmission, c'est-à-dire lorsque la vitesse de la transmission est commutée, la vitesse de rotation d'entrée effective (N_EG) de la transmission est détectée,

**en ce qu'**ensuite pour déterminer la vitesse de rotation de sortie effective (N_AB) de la transmission, la vitesse de rotation d'entrée mesurée (N_EG) est divisée par le dernier rapport de démultiplication utilisé (Ü_G),

**en ce qu'**ensuite la valeur de vitesse de rotation indiquant au moins de manière indirecte la vitesse du véhicule est multipliée par une valeur de démultiplication qui caractérise une démultiplication (valeur de démultiplication = inférieure ou supérieure à 0) ou aucune démultiplication (valeur de démultiplication = 1) entre l'arbre de sortie de boîte de vitesses et le composant rotatif du véhicule au niveau duquel la valeur de vitesse de rotation indiquant au moins de manière indirecte la vitesse du véhicule est mesurée, et **en ce qu'**ensuite pour déterminer la valeur de correction ($F_{Kal}$), la vitesse de rotation de sortie effective (N_AB) est mise en rapport avec la valeur de vitesse de rotation corrigée en démultiplication, indiquant au moins de manière indirecte la vitesse du véhicule,

ou **en ce que** pour déterminer la valeur de correction ($F_{Kal}$), une valeur différentielle est calculée entre ces deux valeurs de vitesse de rotation.

6. Procédé selon la revendication 1 ou 5, **caractérisé en ce que** la valeur de vitesse de rotation indiquant au moins de manière indirecte la vitesse du véhicule est la vitesse de rotation d'au moins une roue du véhicule ou un signal de tachymètre pour la vitesse de conduite, qui est lu sur un système de bus de données du véhicule (bus CAN).

7. Procédé selon au moins l'une quelconque des revendications 1 à 6, **caractérisé en ce que** le procédé est utilisé pour la commande d'une transmission automatisée.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0241216 A